# FASCICULE DE BREVET EUROPEEN

(11) **EP 1 867 260 B1**
(45) Date de publication et mention de la délivrance du brevet: **26.05.2010**
(21) Numéro de dépôt: 06115568.5
(22) Date de dépôt: 16.06.2006
(51) Int. Cl.: A47J 31/44

(54) **Dispositif de distribution de boissons avec système de support et de récupération de gouttes pour récipients de différentes tailles**
Getränkeautomat mit Auflagesystem und Tropffänger für Behälter verschiedener Grössen
Beverage distribution apparatus with support system and droplet recuperation for containers with different sizes

(43) Date de publication de la demande: 19.12.2007
(60) Demande divisionnaire: 10154889.9
(73) Titulaire: Nestec S.A., 1800 Vevey (CH)
(72) Inventeur: Cahen, Antoine, 1005, Lausanne (CH); Cahen, Philippe, 1005, Lausanne (CH)
(74) Mandataire: Schnyder, Frank Simon

(56) Documents cités:
- EP-A2- 0 549 887
- US-A- 5 161 455
- US-A- 5 353 692

## Description

La présente invention se rapporte à un dispositif de distribution de boissons, telle qu'une machine à café, disposant d'un système de récupération de gouttes adapté pour récipients de différentes tailles.

Il existe une demande des consommateurs pour des machines de distribution de boissons, telle que des machines à café, qui puissent délivrer différentes boissons dans des récipients de différentes tailles. Par exemple, il existe des machines à café permettant de préparer un café espresso ou long dans une petite ou moyenne tasse et un café "macchiato" dans un grand verre.

Par ailleurs, il est important de maintenir une faible distance entre la sortie de boisson et le récipient de façon à garantir une bonne qualité de crème ("crema") pour un café et d'autre part éviter les risques de projections. Il faut donc un système qui empêche à l'utilisateur de faire d'erreur par rapport au support utilisé et dans la bonne distance entre la sortie de la boisson et le recipient.

Par ailleurs, il est aussi important de proposer un système de récupération des gouttes qui soit efficace afin de garantir une certaine propreté dans la zone de service.

Il est aussi important de proposer un système qui soit facile d'utilisation et sans complexité technique.

Il faut aussi que le système puisse être d'une maintenance aisée.

Les dispositifs existants dans l'art antérieur ne répondent correctement pas à ces objets.

Certains dispositifs sont formés de plusieurs éléments de support placés en superposition. L'utilisateur doit manipuler un ou plusieurs des ces éléments pour pouvoir correctement adapter le support à la taille du récipient voulu avec le risque de renverser le liquide collecté. Il y aussi le risque pour l'utilisateur de ne pas respecter la bonne distance sortie-récipient en fonction de la boisson distribuée. Par exemple, il peut être amené à utiliser un support trop bas pour un café servi dans une tasse.

Le brevet US 5,353,692 divulgue un distributeur automatique de boissons avec une embase et un support de tasse rétractable vers une position escamotée à l'intérieur de l'embase.

La présente invention vise à proposer une solution qui répond aux exigences précitées et résout les inconvénients de l'art antérieur.

Pour cela, l'invention concerne un dispositif pour la préparation de boissons, telle qu'une machine à café selon la revendication 1. Le dispositif comprend une embase, une sortie de boisson et un système de support et de récupération de gouttes. Le système comprend un élément de support positionnable sous la sortie de boisson pour recevoir un récipient de relativement petite taille. Selon un aspect de l'invention, l'élement de support est mobile selon une position déployée de support adaptée pour recevoir un récipient de petite taille et une position au moins partiellement repoussée dans laquelle l'élément est repoussé de façon à libérer un espace libre vers le bas permettant de positionner un second récipient de plus grande taille, à la place du premier récipient, sous la sortie de boisson.

L'élément de support de tasse est de préférence agencé en surplomb relativement à l'embase en position déployée d'une boisson dans le récipient de petite taille et est arrangé pour pouvoir être repoussé de façon à libérer un espace permettant de positionner un récipient de plus grande taille sous la sortie de boisson.

De préférence, l'élément de support est placé en surplomb à une distance verticale prédéterminée par rapport au plan inférieur de l'embase. Par exemple, la distance est telle qu'un récipient de petite taille ne peut pas repousser l'élément de support suffisamment alors qu'un récipient de grande taille est capable de repousser ledit élément.

Ainsi, selon le concept inventif, le moyen de support et de collecte utilisé pour le récipient de petite taille (par exemple, une tasse) est repoussé simplement lorsqu'un récipient de grande taille est utilisé. Il peut ainsi être repoussé par le récipient lui-même, par exemple, un grand verre. On garantit aussi par ce principe une distance optimale pour délivrer la boisson notamment en évitant tout risque de confusion dans le contrôle du positionnement du récipient sous la sortie de boisson.

Selon un mode possible, l'élément de support est déplaçable en rotation. Il est préférablement repoussé en rotation vers le haut lors du placement d'un récipient de hauteur suffisante qui peut prendre appui contre l'élément et le maintenir ainsi en position repoussée. Par exemple, l'élément de support est articulé solidairement au dispositif par un axe de rotation sensiblement horizontal permettant de repousser ledit élément vers le haut.

De préférence, l'élément de support est agencé en articulation sur le dispositif de façon à pouvoir être repoussé au moins partiellement lors du positionnement d'un récipient de plus grande taille et à retomber par gravité sous la sortie de boisson au moment ou l'utilisateur enlève ledit récipient. Ainsi, les dernières gouttes provenant de la sortie de boisson peuvent être récupérées par l'élément de support lui-même au moment ou l'utilisateur enlève le récipient de grande taille de la zone de service.

Selon un autre aspect possible, le système comprend un bac collecteur de liquide lequel est disposé pour recevoir le liquide récupéré par l'élément de support au moment où celui-ci est positionné en position repoussée. Ainsi, l'élément de support peut être vidé régulièrement; ce qui diminue les risques de débordement de liquide, améliore la propreté du dispositif et réduit les problèmes d'hygiène.

Selon une construction préférentielle, l'élément de support et le bac collecteur sont solidaires pour former un tiroir lequel est amovible par rapport à l'embase. Dans ce cas, l'élément de support peut être articulé de manière amovible sur le bac collecteur lui-même ou toute autre pièce solidaire du tiroir. Ce concept modulaire de tiroir rend la maintenance plus aisée et permet un nettoyage de l'ensemble du système de support et de collecte.

Le dispositif de l'invention peut aussi comprendre un dispositif de verrouillage de l'élément de support en position entièrement repoussée. Le dispositif de verrouillage peut être arrangé de façon à libérer automatiquement l'élément de support en position déployée. Une fois libéré par le dispositif de verrouillage, l'élément de support peut retomber, par exemple, par gravité en position déployée. Un verrouillage peut être utile notamment pour effectuer la maintenance et/ou lorsque le dispositif n'est pas été utilisé de façon à réduire son encombrement. La remise en place de l'élément de support peut être automatique, c'est à dire ne nécessitant pas de manipulations du support lui-même. De la sorte, le risque est réduit de pouvoir alors placer un récipient de petite taille alors que l'élément est encore verrouillé en position relevée ou repoussée.

Selon un mode préférentiel, les moyens de verrouillage sont contrôlés par le moyen de mise sous tension "marche/arrêt" du dispositif. Plus précisément, lorsque le dispositif est mis sous tension par le bouton de mise en marche, la pression exercée sur le bouton entraîne un déverrouillage des moyens de verrouillage. Le contrôle du bouton sur les moyens de verrouillage peut être de nature mécanique, électromagnétique et/ou électrique par exemple.

L'invention n'est pas nécessairement limitée à un élément de support agencé en rotation. On peut prévoir aussi un mode de réalisation dans lequel l'élément est repoussé par d'autres moyens tel que par glissement à la manière d'un tiroir dans un logement du dispositif.

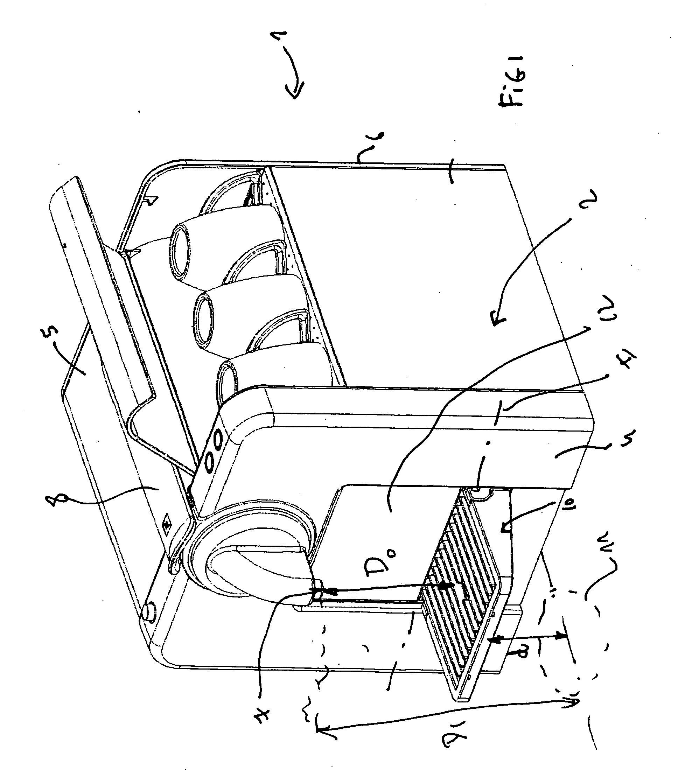

La figure 1 représente en vue en perspective un dispositif selon l'invention;
La figure 2 montre un détail du système de support et de récupération selon l'invention en vue éclatée;
La figure 3 montre un détail du système de support et de récupération selon l'invention en assemblage sous forme de tiroir;
La figure 4 représente une vue de détail en perspective d'une partie du dispositif dans lequel le système de support et de récupération de gouttes est en position verrouillée;
La figure 5 représente une vue de détail d'une partie du dispositif avec le système déployée pour recevoir des récipients de petite ou moyenne tailles.

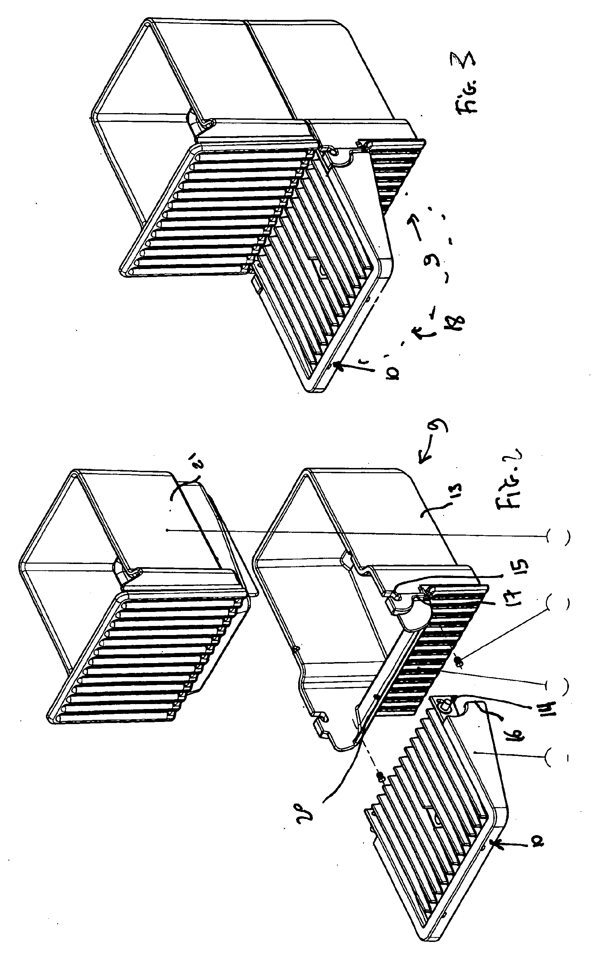

Par référence aux figures, le dispositif pour la préparation de boisson porte la référence 1 et sera appelé par simplification "machine à café" dans la suite de la description. La machine à café selon l'invention comprend une embase 2 pouvant recouvrir un ensemble de pièces assemblées comme une ossature interne 3 (illustrée aux figures 2-3) sur laquelle sont adaptés différents panneaux externes 4, 5, 6. La machine comprend une sortie de boisson 7 laquelle peut prendre différentes formes. La machine comprend par exemple aussi des moyens 8 de fermeture du module d'extraction ou de percolation.

La technique d'extraction ou de dilution n'étant pas l'objet de l'invention, il n'est pas nécessaire de décrire celle-ci. Pour exemple seulement, la machine peut comprendre en interne un module d'extraction servant à extraire, dissoudre et/ou diluer l'ingrédient alimentaire sous pression et le délivrer au travers de la sortie de boisson. L'ingrédient alimentaire est de préférence contenu dans un emballage fermé tel qu'une capsule, un sachet ou tout autre emballage adapté pour la machine.

Le dispositif selon l'invention comprend un système de support de récipient et de collecte ou récupération des gouttes 9. Le système est formé d'un élément de support 10 qui se positionne sous la sortie de boisson et en surplomb de la machine. Par positionnement en "surplomb", il faut entendre que l'élément de support prolonge le dispositif dans au moins une direction et n'est pas supportée par dessous de façon à former ainsi une sorte de balcon. L'élément de support est placé à une distance D par rapport à la sortie de boisson prédéfinie de façon à optimiser la distance d'écoulement lors de la réception de récipients de petites ou moyennes tailles (c'est à dire, par exemple, des tasses pouvant contenir respectivement environ 25, 40 ou 110 mL). Aussi, l'élément est distant d'une distance "d" de la surface de placement 11 pour le positionnement d'un récipient de plus grande taille lorsque l'élément est repoussé par le récipient. La surface de placement ou support du récipient peut être virtuelle, c'est à dire, simplement celle d'une table de cuisine ou autre surface ne faisant pas partie de la machine elle-même ou encore "réelle, c'est-à-dire, faire partie d'une surface de support de la machine elle-même. Toutefois, l'invention trouve un intérêt dans la simplification de la machine et donc il n'est pas nécessaire de prévoir un support spécifique pour le récipient de grande taille (ci-après dénommé "grand verre") comme il sera expliqué plus loin.

L'élément de support 10 est ainsi déplaçable librement en rotation selon un axe de rotation I relativement à l'embase. L'élément peut se trouver en position repoussée vers le haut ou "relevé", dans ce cas, il permet le positionnement d'un grand verre. Le grand verre repousse simplement l'élément de support qui se relève. Le relèvement peut être partiel de sorte que l'élément ne soit pas entièrement logé dans le logement 12 prévu dans l'embase. La sortie de boisson 7 est aussi prévue de sorte que la distance D1 entre la sortie et la surface de placement 11 soit optimale pour un grand verre, de façon à limiter notamment les risques d'éclaboussures et permettre un écoulement rapproché qui ne nuit pas à la mousse en formation ou déjà formée dans le verre.

Les figures 2 et 3 montrent le système de support et de collecte 9 en tant que tel. Le système se présente sous la forme d'un ensemble-tiroir. Un premier bac collecteur 13 est prévu pour récupérer le liquide provenant de l'élément de support 10. L'élément de support est articulé de manière amovible sur les faces latérales du bac collecteur 13 par des ergots 14 se rapportant dans des lumières 15 des faces. L'élément de support comprend sur les côtés des surfaces d'appui 16 placées en dessous de l'axe de rotation, de manière à s'engager en appui contre des surfaces avant 17 du bac. De la sorte, l'élément de support est maintenu en surplomb tout en libérant un espace 18 sous l'élément. L'élément de support offre un support solide pour la dépose d'une tasse de petite/moyenne contenance. Sur l'avant, le bac d'écoulement peut être muni d'une goulotte 20 qui s'avance sous l'élément de support et assure ainsi une meilleure récupération du liquide.

Un second bac de récupération 21 pour les capsules de café peut s'emboîter sur le premier bac collecteur 13. Une fois installé dans la machine, le bac 21 est agencé pour récupérer les capsules usagées éjectées par le module d'extraction.

Le système de support et de collecte 9 selon l'invention forme un seul bloc modulaire qui peut être facilement désengagé de l'embase par simple glissement, par exemple, rendant ainsi plus aisé la maintenance, à savoir, la vidange à la fois du liquide et des capsules usagées et le nettoyage des bacs.

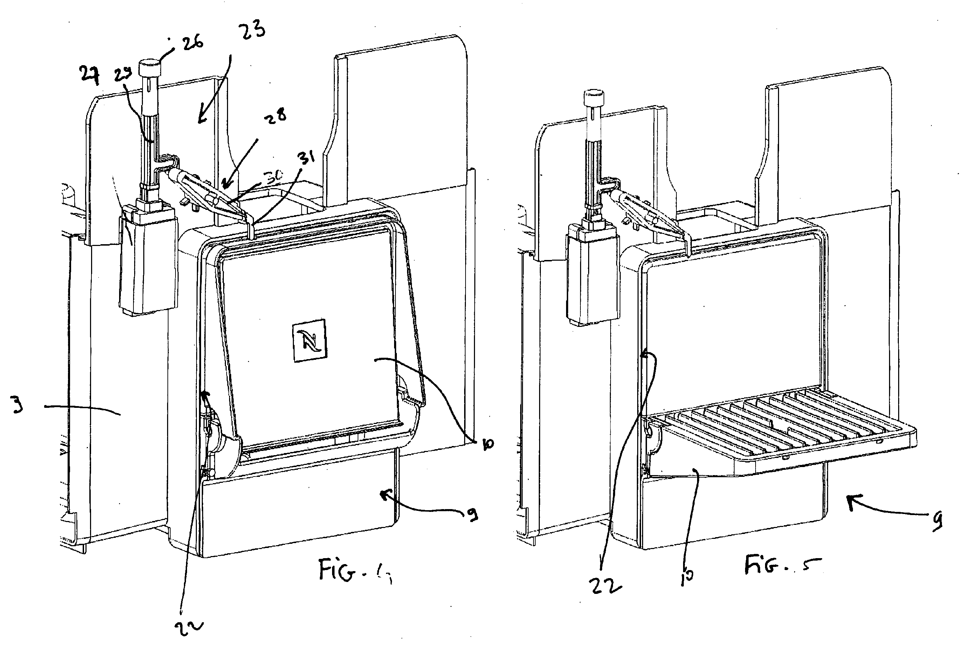

Comme le montrent les figures 4 et 5, le système de support et de collecte 9 s'engage en glissement dans un logement 22 de l'embase de la machine. Une fois en place, le système est alors fonctionnellement et esthétiquement intégré au reste de la machine.

La machine comprend aussi préférentiellement un dispositif de verrouillage 23 permettant de verrouiller l'élément de support 10 dans une position entièrement rétractée ou repoussée, comme par exemple, en partie au moins dans le logement 22. Tout moyen de verrouillage est envisageable comme des moyens mécaniques ou à électro-aimants. Selon un mode préférentiel, le dispositif de verrouillage comprend des moyens de verrouillage qui sont associés à un moyen de contrôle. Le moyen de contrôle agit sur les moyens de verrouillage pour libérer sélectivement l'élément de support. L'élément de support est alors libéré en rotation jusqu'à sa position déployée (figure 5).

Le moyen de contrôle inclut préférentiellement le bouton marche/arrêt 26 de la machine permettant de mettre la machine sous tension. Ce moyen est comme connu en soi associé à un interrupteur électrique 27 permettant d'alimenter sélectivement les composants électriques et électroniques de la machine (chauffe-eau, pompe, contrôle électronique, etc.). Dans ce cas particulier, le bouton marche/arrêt 26 est relié mécaniquement à un verrou 28 formé, par exemple, par un poussoir mécanique 29 qui active une bascule 30 solidaire d'un doigt de retenue 31 agissant en retenue sur le bord avant de l'élément de support 10. L'élément de bascule 30 peut être associé à des moyens élastiques (par exemple, un ressort) afin de prévoir le retour automatique du doigt en position de verrouillage après suppression de la pression sur le bouton marche/arrêt comme le montre la figure 5.

L'avantage d'associer le verrouillage de l'élément de support en position rétractée au contrôle marche/arrêt est d'éviter la situation permettant à l'utilisateur de préparer une boisson dans un récipient de petite taille lorsque l'élément de support est verrouillé. Lorsque l'utilisateur veut préparer un café dans une tasse, par exemple, par opposition à un grand verre, il doit d'abord appuyer sur le bouton marche/arrêt; ce qui active le verrou en ouverture et libère l'élément de support. A contrario, s'il veut préparer une boisson dans une grande tasse, il lui suffit de repousser partiellement l'élément de support 10 en rotation vers le haut au moyen du grand verre.

## Revendications

1. Dispositif (1) pour la préparation de boissons comprenant une embase (2) et un système de support et de récupération de gouttes lequel comprend un élément de support (10) positionnable sous une sortie de boisson (7) pour recevoir un premier récipient de relativement petite taille, l'élément de support étant mobile entre une position déployée de support vers le bas adaptée pour recevoir un récipient de petite taille et une position au moins partiellement repoussée dans laquelle l'élément est repoussé vers le haut de façon à libérer un espace libre permettant de positionner un second récipient de plus grande taille, à la place du premier récipient, sous la sortie de boisson, **caractérisé en ce que** la position repoussé vers le haut du support de tasse est extérieure à l'embase.

2. Dispositif selon la revendication 1, **caractérisé en ce que** l'élément de support (10) est placé en surplomb par rapport à l'embase (2) en position déployée de support du premier récipient, l'élément de support (10) comprenant en particulier une surface d'appui (16) destinées à fournir un appui pour maintenir l'élément de support en position déployée en surplomb.

3. Dispositif selon la revendication 1 ou 2, **caractérisé en ce que** l'élément de support (10) est déplaçable en rotation entre sa position déployée et sa position repoussée, l'élément de support étant en particulier articulé selon un axe de rotation permettant de repousser ledit élément vers le haut.

4. Dispositif selon l'une quelconque des revendications précédentes, **caractérisé en ce que** l'élément de support est agencé en articulation de façon à pouvoir être repoussé au moins partiellement lors du positionnement d'un récipient de plus grande hauteur et à retomber par gravité sous la sortie de boisson au moment ou l'utilisateur enlève ledit récipient.

5. Dispositif selon l'une quelconque des revendications précédentes, **caractérisé en ce que** l'élément de support (10) est repoussable dans un logement (22) délimité par l'embase (2).

6. Dispositif selon l'une quelconque des revendications précédentes, **caractérisé en ce que** l'élément de support mobile est arrangé pour la récupération de liquide en position déployée.

7. Dispositif selon la revendication 6, **caractérisé en ce que** le système comprend un bac collecteur de liquide (13) lequel est disposé pour recevoir le liquide récupéré par l'élément de support (10) au moment où celui-ci est positionné en position déployée, l'élément de support et le bac collecteur étant en particulier solidaires pour former un tiroir lequel est amovible par rapport à l'embase.

8. Dispositif selon l'une quelconque des revendications précédentes, **caractérisé en ce que** ledit dispositif (1) est configuré de sorte à pourvoir être placé sur une surface de support, telle qu'une surface de table de cuisine, comprenant une surface de placement (11) délimitant ledit espace libre permettant de positionner ledit second récipient.

9. Dispositif selon l'une quelconque des revendications précédentes, **caractérisé en ce qu'**il comprend un dispositif de verrouillage (23) de l'élément de support en position entièrement repoussée.

10. Dispositif selon la revendication 9, **caractérisé en ce que** le dispositif de verrouillage est arrangé de façon à libérer automatiquement l'élément de support en position déployée.

11. Dispositif selon la revendication 10, **caractérisé en ce que** l'élément de support (10) est verrouillé en position repoussée de manière à retomber par gravité en position déployée une fois libéré par le dispositif de verrouillage (23).

12. Dispositif selon la revendication 10 ou 11, **caractérisé en ce que** les moyens de verrouillage sont contrôlés par un moyen de marche/arrêt (26).

13. Dispositif selon l'une quelconque des revendications précédentes, **caractérisé en ce que** l'élément de support est déplacé le long ou dans un logement de la base.

14. Dispositif selon la revendication 1 ou 2, **caractérisé en ce qu'**il comprend un logement dans lequel l'élément de support est inséré par glissement.

## Claims

1. Device (1) for preparing drinks comprising a base (2) and a supporting and drip-collecting system that comprises a supporting element (10) positionable beneath a drink outlet (7) in order to accept a first, relatively small receptacle, the supporting element being movable between a downwardly deployed supporting position suitable for accepting a small receptacle and an at least partly pushed-away position in which the element is upwardly pushed away so as to create an unoccupied space in which a second, larger receptacle can be positioned, in place of the first receptacle, beneath the drink outlet, **characterised in that** the upwardly pushed-away position of the cup support is outside the base.

2. Device according to Claim 1, **characterised in that** the supporting element (10) is placed in an overhanging manner with respect to the base (2) in the deployed position for supporting the first receptacle, the supporting element (10) comprising in particular a bearing surface (16) intended to provide a bearing for maintaining the supporting element in the overhanging deployed position.

3. Device according to Claim 1 or 2, **characterised in that** the supporting element (10) is rotationally displaceable between its deployed position and its pushed-away position, the supporting element being in particular hinged about an axis of rotation allowing the said element to be upwardly pushed away.

4. Device according to any one of the preceding claims, **characterised in that** the supporting element is arranged in a hinged manner so as to be able to be at least partly pushed away during the positioning of a taller receptacle and so as to fall back under gravity beneath the drink outlet when the user removes the said receptacle.

5. Device according to any one of the preceding claims, **characterised in that** the supporting element (10) can be pushed away into a housing (22) delimited by the base (2).

6. Device according to any one of the preceding claims, **characterised in that** the movable supporting element (10) is arranged to collect liquid in the deployed position.

7. Device according to Claim 6, **characterised in that** the system comprises a liquid-collecting tray (13) arranged to receive the liquid collected by the supporting element (10) when the latter is positioned in the deployed position, the supporting element and the collecting tray being in particular joined together to form a drawer which is removable from the base.

8. Device according to any one of the preceding claims, **characterised in that** the device (1) is configured so as to be able to be placed on a supporting surface, such as a kitchen table surface, comprising a placement surface (11) delimiting the said unoccupied space allowing the said second receptacle to be positioned.

9. Device according to any one of the preceding claims, **characterised in that** it comprises a locking device (23) for locking the supporting element in the fully pushed-away position.

10. Device according to Claim 9, **characterised in that** the locking device is arranged so as to release the supporting element automatically into the deployed position.

11. Device according to Claim 10, **characterised in that** the supporting element (10) is locked in the pushed-away position in such a way as to fall back under gravity into the deployed position when released by the locking device (23).

12. Device according to Claim 10 or 11, **characterised in that** the locking means are controlled by an on/off means (26).

13. Device according to any one of the preceding claims, **characterised in that** the supporting element is displaced along or into a housing in the base.

14. Device according to Claim 1 or 2, **characterised in that** it comprises a housing into which the supporting element is inserted by sliding.

## Patentansprüche

1. Vorrichtung (1) zur Zubereitung von Getränken, mit einem Gehäuse (2) und einem Auflage- und Tropfenfängersystem, welches ein Auflageelement (10) umfasst, das unter einem Getränke-Auslass (7) positionierbar ist, um einen ersten Behälter von relativ geringer Größe aufzunehmen, wobei das Auflageelement bewegbar ist zwischen einer nach unten ausgeklappten Position, in der es geeignet ist, einen Behälter von relativ geringer Größe aufzunehmen, und einer zumindest teilweise eingeklappten Position, in der das Element nach oben eingeklappt ist, so dass es einen freien Raum freigibt und es so ermöglicht, anstatt des ersten Behälters einen zweiten, größeren Behälter unter dem Getränke-Ausguss zu positionieren,
**dadurch gekennzeichnet,**
**dass** sich die nach oben eingeschobene Position der Tassenauflage außerhalb des Gehäuses befindet.

2. Vorrichtung nach Anspruch 1,
**dadurch gekennzeichnet,**
**dass** das Auflageelement (10) in der ausgeklappten Position zur Aufnahme des ersten Behälters zu dem Gehäuse (2) angeordnet ist, wobei das Auflageelement (10) insbesondere eine Stützfläche (16) aufweist, die dazu bestimmt ist, eine Stütze zu bieten, um das Auflageelement ausladend in ausgeklappter Position zu halten.

3. Vorrichtung nach Anspruch 1 oder 2,
**dadurch gekennzeichnet,**
**dass** das Auflageelement (10) zwischen seiner ausgeklappten Position und seiner eingeklappten Position in Drehbewegung verschiebbar ist, wobei das Auflageelement insbesondere mit einer Drehachse angelenkt ist, die es ermöglicht, dieses Element nach oben einzuklappen.

4. Vorrichtung nach einem der vorherigen Ansprüche,
**dadurch gekennzeichnet,**
**dass** das Auflageelement dergestalt angelenkt angeordnet ist, dass es beim Positionieren eines größeren Behälters zumindest teilweise eingeklappt werden kann und in dem Augenblick, in dem der Benützer diesen Behälter entnimmt, durch die Schwerkraft unter den Getränke-Ausguss zurückfällt.

5. Vorrichtung nach einem der vorherigen Ansprüche,
**dadurch gekennzeichnet,**
**dass** das Auflageelement (10) in eine Aufnahme (22) eingeschoben werden kann, die von dem Gehäuse (2) gebildet wird.

6. Vorrichtung nach einem der vorherigen Ansprüche,
**dadurch gekennzeichnet,**
**dass** das bewegliche Auflageelement in aufgeklappter Position zum Auffangen von Flüssigkeit angeordnet ist.

7. Vorrichtung nach Anspruch 6,
**dadurch gekennzeichnet,**
**dass** das System einen Flüssigkeitssammelkasten (13) aufweist, der so angeordnet ist, dass er die Flüssigkeit, die durch das Auflageelement (10) aufgefangen wird, sobald dieses sich in ausgeklappter Position befindet, aufnimmt, wobei das Auflageelement und der Sammelkasten insbesondere fest miteinander verbunden sind, um ein Schubfach zu bilden, das aus dem Gehäuse herausgezogen werden kann.

8. Vorrichtung nach einem der vorherigen Ansprüche,
**dadurch gekennzeichnet,**
**dass** diese Vorrichtung (1) so konfiguriert ist, dass sie auf einer Unterlagefläche wie beispielsweise der Oberfläche eines Küchentisches abgestellt werden kann, welche eine Stellfläche (11) umfasst, die den genannten freien Raum bildet, auf die der genannte zweite Behälter gestellt werden kann.

9. Vorrichtung nach einem der vorherigen Ansprüdhe,
**dadurch gekennzeichnet,**
**dass** sie eine Verriegelungsvorrichtung (23) zum Verriegeln des Auflageelements in vollständig eingeklappter Position aufweist.

10. Vorrichtung nach Anspruch 9,
**dadurch gekennzeichnet,**
**dass** die Verriegelungsvorrichtung dergestalt ausgeführt ist, dass sie das Auflageelement in ausgeklappter Position automatisch freigibt.

11. Vorrichtung nach Anspruch 10,
**dadurch gekennzeichnet,**
**dass** das Auflageelement (10) in eingeklappter Position dergestalt verriegelt ist, dass es durch Schwerkraft in die ausgeklappte Position zurückfällt, sobald es von der Verriegelungsvorrichtung (23) freigegeben wird.

12. Vorrichtung nach Anspruch 10 oder 11,
**dadurch gekennzeichnet,**
**dass** die Verriegelungsmittel durch ein Einschalt-/Ausschaltmittel (26) gesteuert werden.

13. Vorrichtung nach einem der vorherigen Ansprüche,
**dadurch gekennzeichnet,**
**dass** das Auflageelement entlang oder in einer Aufnahme an dem Gehäuse verschoben wird.

14. Vorrichtung nach Anspruch 1 oder 2,
**dadurch gekennzeichnet,**
**dass** sie eine Aufnahme aufweist, in die das Auflageelement gleitend eingeschoben wird.
